# EUROPÄISCHE PATENTSCHRIFT

(11) **EP 1 446 523 B1**
(45) Veröffentlichungstag und Bekanntmachung des Hinweises auf die Patenterteilung: **23.01.2008**
(21) Anmeldenummer: 02776799.5
(22) Anmeldetag: 10.10.2002
(51) Int. Cl.: D06Q 1/02

(54) **VERFAHREN ZUM TRENNEN EINES AUS ZWEI ODER MEHEREN KOMPONENTEN BESTEHENDEN TEXTILGUTES**
METHOD FOR SEPARATING A TEXTILE PRODUCT CONSISTING OF AT LEAST TWO CONSTITUENTS
PROCEDE DE SEPARATION D'UN PRODUIT TEXTILE COMPOSE D'AU MOINS DEUX COMPOSANTES

(30) Priorität: 20.10.2001 DE 10151821
(43) Veröffentlichungstag der Anmeldung: 18.08.2004
(73) Patentinhaber: THÜRINGISCHES INSTITUT FÜR TEXTIL- UND KUNSTSTOFF-FORSCHUNG e.V., 07407 Rudolstadt (DE); Textilausrüstung Pfand Gmbh, 08485 Lengenfeld (DE)
(72) Erfinder: KOSAN, Birgit, 07407 Rudolstadt (DE); MICHELS, Christoph, 07407 Rudolstadt (DE); PFAND, Frieder, 08485 Lengenfeld (DE); PFAND, Kristiane, 08485 Lengenfeld (DE)
(74) Vertreter: Fritz & Brandenburg Patentanwälte
(86) Internationale Anmeldenummer: PCT/DE2002/003823
(87) Internationale Veröffentlichungsnummer: WO 2003/035963

(56) Entgegenhaltungen:
- EP-A- 0 290 027
- EP-A- 1 010 794
- US-A- 2 466 066
- US-A- 5 794 555
- PATENT ABSTRACTS OF JAPAN vol. 1999, no. 04, 30. April 1999 (1999-04-30) & JP 11 021758 A (NICHIBI:KK), 26. Januar 1999 (1999-01-26) -& JP 11 021758 A (NICHIBI:KK) 26. Januar 1999 (1999-01-26)
- DATABASE WPI Section Ch, Week 198634 Derwent Publications Ltd., London, GB; Class A23, AN 1986-222132 XP002256198 & JP 61 152888 A (TORAY IND INC), 11. Juli 1986 (1986-07-11) -& JP 61 152888 A (TORAY IND INC) 11. Juli 1986 (1986-07-11)
- DATABASE WPI Section Ch, Week 199432 Derwent Publications Ltd., London, GB; Class A23, AN 1994-261138 XP002256199 & KR 9 307 831 B1 (SUNKYONG IND KK), 20. August 1993 (1993-08-20)

## Beschreibung

Die Erfindung betrifft ein Verfahren zum Trennen eines aus zwei oder mehreren Komponenten bestehenden Textilgutes durch Behandeln mit einer flüssigen Phase, die für mindestens eine Komponente ein Lösungsmittel und für die anderen Komponenten weitgehend ein Nichtlösungsmittel darstellt.

### [Stand der Technik]

In der Stickereiindustrie ist es üblich, zum Erzeugen bestimmter Verzierungseffekte ein textiles Trägermaterial, vorwiegend auf cellulosischer Basis, mit verschiedenen Techniken und Materialien zu besticken und anschließend das Trägermaterial zu entfernen. Hierfür nutzt man seit vielen Jahren das sogenannte "Trockenätzverfahren". Durch Tränken des cellulosischen Trägermaterials mit Aluminiumsulfat-Lösungen vor dem Sticken und thermische Behandlung nach dem Sticken erfährt die Cellulose im Stickgrund einen weitgehenden Abbau und die verbleibenden Bruchstücke werden durch intensive mechanische Behandlung wie Klopfen entfernt. Neben Verfärbungen und teilweiser Zerstörung der Nutzschicht, ist die mechanische Behandlung von erheblicher Lärm- und Staubbelastung begleitet. Ein anderes Verfahren, die sogenannte "Nassätze" verwendet ein Trägermaterial auf Basis Polyvinylalkohol, welches in heißem Wasser löslich ist.

Die unzureichende Temperaturbeständigkeit und der hohe Preis des Trägermaterials lassen nur einen begrenzten Einsatz für sehr feine Stickereien zu. (vergl. Schöner u. Freier "Stickereitechniken", Seite 423 ff., Fachbuch-Verlag Leipzig; Schöner "Spitzen", Seite 346 ff., Enzyklopädie der Spitzentechniken und Freier "Technologie und Erzeugnislehre Stickerei" Leipzig 1984).

Im EP 290027 wird ein Verfahren beschrieben, wo durch Einwirkung von Enzymen (Cellulasen) das cellulosische Trägermaterial eine Totalhydrolyse erfahren soll und die niedermolekularen Abbauprodukte in heißem Wasser löslich sind. Das Verfahren hat den Nachteil, das einerseits für eine Totalhydrolyse von Cellulose eine hohe Enzymkonzentration und eine lange, meist mehrstufige Behandlung (lt. EP 290027: 16 - 24 Stunden) erforderlich ist und andererseits eine cellulosische Nutzschicht mechanisch erheblich geschädigt wird. Allen genannten Verfahren ist gemeinsam, dass das Trennen von Trägermaterial und textiler Nutzschicht immer auf einem Abbau der Cellulose beruht.

### [Aufgabe der Erfindung]

Aufgabe der vorliegenden Erfindung ist die Schaffung eines kontinuierlichen, kostengünstigen und umweltfreundlichen Verfahrens, zum Trennen von cellulosischer Komponente und ein- bzw. mehrkomponentiger textiler Nutzschicht unter milden Bedingungen, bei geringer Verweilzeit und minimaler Belastung der Nutzschicht.

Diese Aufgabe wird bei dem eingangs genannten Verfahren dadurch gelöst, dass man das aus zwei oder mehreren Komponenten bestehende Textilgut mehrstufig mit wässrigen Aminoxiden, vorzugsweise N-Methylmorpholin-N-oxid (NMMO) solange behandelt, bis sich die aus Polysacchariden, vorzugsweise Cellulose bestehende Trägerkomponente durch Lösen vollständig von der Nutzschicht trennt. An der Nutzschicht anhaftendes Aminoxid entfernt man durch Waschen mit Wasser. Die Waschbäder dienen zum Fällen der gelösten Cellulose. Durch Filtration, Zentrifugieren oder ähnliche Prozesse trennt man die gefällte Cellulose vom Aminoxid, führt sie einem anderem Verwendungszweck zu bzw. entsorgt sie, beispielweise durch Nassverbrennung. Das wässrige Aminoxid fließt nach Entzug von überschüssigem Wasser durch Verdampfen in den Lösekreislauf zurück.

Die maximale Arbeitsgeschwindigkeit bei einer kontinuierlichen Prozessführung wird vorrangig durch die Länge der Badstrecken bestimmt und liegt vorzugsweise im Bereich 0,08 - 1,2 m/min. Über diesen Bereich hinaus kann die Viskosität der Celluloselösung in der ersten Stufe eine weitere Begrenzung darstellen.

Bei einer bevorzugten Form des Verfahrens enthält das Lösungsmittel NMMO gleichzeitig eine Kombination von Alkalimetallhydroxiden, Hydroxylamin und Antioxidantien, vorzugsweise in einer Konzentration von 0,001 - 1 Masse %. Als Antioxidantien gelangen wasserlösliche Gallussäureester, Tannine, Hydrochinon oder Brenzkatechin zum Einsatz. Diese Zusätze erhöhen die thermische Stabilität der Aminoxide und vermindern eine Verfärbung bei mehrmaligem Einsatz.

Zum Reinigen der wässrigen Aminoxide nach mehrfachem Prozessdurchlauf hat sich eine Behandlung mit Ionenaustauschern bewährt, wobei vorzugsweise in erster Stufe ein Anionen- und in zweiter Stufe ein Kationenaustauscher zum Einsatz gelangt. Der Löseprozess lässt sich deutlich beschleunigen, wenn man das Textilgut vor dem eigentlichen Lösen mit wässrigem Aminoxid (NMMO - Gehalt kleiner 80 Masse %), das noch keine Lösekraft für die cellulosische Komponente besitzt, imprägniert und gegebenenfalls vortrocknet.

Das erfindungsgemäße Verfahren, soll an Ausführungsbeispielen erläutert werden.

### [Beispiele]

### Beispiel 1

Ein Gewebe aus Viskosespinnfasergarn (Flächenmasse 60 g/m²), bestickt mit Polyesterspinnfasergarn (Stickmasse 360 g/m²) wird kontinuierlich mit 0,1 m/min einem Warenspeicher entnommen und passiert nacheinander eine mit wässrigem Aminoxid (60 Masse % NMMO) gefüllte Tauchwalze, ein Quetschwalzenpaar, eine auf 120°C temperierte Trockenwalze, eine vierstufige mit wässrigem Aminoxid (85 Masse % NMMO; 0,05 Masse % Hydroxylamin; 0,05 Masse % Gallussäurepropylester) gefüllte und auf 90°C temperierte Lösekammer und ein Quetschwalzenpaar, die reine Stickmasse durchläuft dann eine vierstufige auf 60°C temperierte Waschkammer, eine auf 130°C temperierte Trockenwalze und wird anschließend in einem Warenspeicher abgelegt. In der vierstufigen Lösekammer steigt die Cellulosekonzentration von 0,1 Masse % in der vierten auf 2,1 Masse % in der ersten Kammer an. In der vierten Kammer wird kontinuierlich frisches auf 85°C vorgewärmtes Aminoxid zudosiert und in der ersten Kammer die gleiche Menge mit Cellulose beladenes Aminoxid abgenommen und der Aufbereitung zugeführt. Zur Beschleunigung des Löseprozesses wird das wässrige Aminoxid in jeder Kammer separat umgepumpt. Die vierstufige Waschkammer arbeitet nach dem gleichen Prinzip, d.h. in der vierten Waschkammer wird auf 60°C vorgewärmtes reines Wasser zudosiert und in der ersten Kammer die gleiche Menge mit Aminoxid beladenes Wasser abgenommen.

Das Waschwasser aus der ersten Kammer und das Waschwasser aus dem Waschprozess der gefällten Cellulose dient zum Fällen der Cellulose aus der Lösung der ersten Lösekammer durch Verdünnen von 85 auf 45 - 50 Masse % NMMO. Das Abtrennen der Cellulose erfolgt durch Zentrifugieren. Das Zentrifugat, durch Zusatz von Natriumhydroxid auf einen pH-Wert von 11 eingestellt, gelangt nach Aufkonzentrieren auf 85 Masse % NMMO wieder in den Löseprozess, der Zentrifugenrückstand wird gewaschen und entsorgt.

Nach mehrfacher Benutzung durchläuft ein Teil des Zentrifugates vor dem Aufkonzentrieren einen Anionen- und einen Kationenaustauscher, wo farbige Bestandteile und Metallionen abgetrennt werden.

### Beispiel 2

Ein Gewebe aus Lyocellspinnfasergarn (Kette) und Viskosefilamentgarn (Schuß) mit einer Flächenmasse von 65 g/m², bestickt mit einem Polyester/Baumwollmischgarn (70/30; Stickmasse 240 g/m²) wird analog Beispiel 1 mit einer Arbeitsgeschwindigkeit von 0,09 m/min behandelt. Der Durchschnittspolymerisationsgrad (Cuoxam Methode) der Lyocell-Spinnfasern beträgt 490, der des Viskosefilamentgarns 285 und der der Baumwolle ca. 7500. Die Einwirkung des Aminoxids beim Lösen des Trägergewebes auf den Baumwollanteil ist so gering, dass im visuellen Warenausfall und Griff keine negative Veränderung festzustellen ist.

### Beispiel 3

Ein Gewebe aus Viskosespinnfasergarn (Flächenmasse 50 g/m²; Cuoxam DP 300), bestickt mit reinem Baumwollgarn (Stickmasse 150 g/m²; Cuoxam DP ca. 8500) wurde analog Beispiel 1 mit einer Arbeitsgeschwindigkeit von 0,35 m/min behandelt. Durch Mehrfachumlenkung in der vierten Lösekammer wurde die Verweilzeit erhöht. Der Warenausfall der resultierenden Stickerei ist visuell sehr gut. Im Griff ist im Vergleich zur "Trockenätze" eine Versteifung feststellbar. Der etwas härtere Griff der Stickerei sollte durch ein partielles Anlösen der Baumwollfasern bedingt sein. Für bestimmte Einsatzgebiete ist eine graduelle Versteifung der Spitze sogar erwünscht.

## Patentansprüche

1. Verfahren zum Trennen eines aus zwei oder mehreren Komponenten bestehenden Textilgutes, **dadurch gekennzeichnet, dass** mindestens eine Komponente aus Polysacchariden, vorzugsweise /S Cellulose, besteht und dass man diese durch Lösen in wässrigen Aminoxiden, vorzugsweise N-Methylmorpholin-N-oxid, von der/den anderen Komponente(n) trennt.

2. Verfahren nach Anspruch 1, **dadurch gekennzeichnet, dass** das Textilgut aus einem cellulosischem Trägermaterial und einem nichtcellulosischem Nutzmaterial besteht.

3. Verfahren nach Anspruch 1, **dadurch gekennzeichnet, dass** sich das Textilgut aus einem cellulosischem Trägermaterial und einem ganz oder teilweise aus Cellulose bestehendem Nutzmaterial zusammensetzt und das die Molmasse der Cellulose im Nutzmaterial mindestens um den Faktor 10 über der des Trägermaterials liegt.

4. Verfahren nach Anspruch 1-3, **dadurch gekennzeichnet, dass** das cellulosische Trägermaterial aus einem Faser- und/oder Filamentgarn besteht.

5. Verfahren nach mindestens einem der Ansprüche 1 bis 4, **dadurch gekennzeichnet, dass** die cellulosische Komponente teilweise Stärke und/oder Stärkederivate enthält.

6. Verfahren nach mindestens einem der Ansprüche 1 bis 5, **dadurch gekennzeichnet, dass** man die textile Nutzschicht nach vollständigem Lösen der Polysaccharidkomponente durch Waschen von anhaftendem Aminoxid befreit, gegebenenfalls nachbehandelt, trocknet und aufwickelt.

7. Verfahren nach Anspruch 1 bis 6, **dadurch gekennzeichnet, dass** das wässrige Aminoxid gleichzeitig eine Kombination von Alkalimetallhydroxid, Hydroxylamin und wasserlöslichen Antioxidantien enthält.

8. Verfahren nach Anspruch 7, **dadurch gekennzeichnet, dass** das Antioxidans ein wasserlöslicher Gallussäureester, Tannin, Hydrochinon oder Brenzkatechin ist.

9. Verfahren nach Anspruch 7, **dadurch gekennzeichnet, dass** man das Hydroxylamin als Salz einer Säure einsetzt.

10. Verfahren nach Anspruch 1 bis 9, **dadurch gekennzeichnet, dass** man das Textilgut vor dem Lösen mit einer wässrigen Aminoxidlösung imprägniert und gegebenenfalls durch Vortrocknen einen Teil des Wassers entfernt.

11. Verfahren nach Anspruch 1 bis 10, **dadurch gekennzeichnet, dass** man die gelöste Cellulose und gegebenenfalls Stärke bzw. Stärkederivate durch Fällen und Waschen vom Aminoxid trennt, das Aminoxid durch Verdampfen von Wasser aufkonzentriert und zum Lösen erneut einsetzt.

12. Verfahren nach mindestens einem der Ansprüche 1 bis 11, **dadurch gekennzeichnet, dass** man einen Teil des wässrigen Aminoxides vor dem Eindampfen einer Reinigung über Ionenaustauscher unterzieht.

## Claims

1. Process for separating a textile material consisting of two or more components, **characterized in that** at least one component consists of polysaccharides, preferably cellulose, and **in that** these are separated from the other component or components by dissolving in aqueous amine oxides, preferably N-methylmorpholine N-oxide.

2. Process according to Claim 1, **characterized in that** the textile material consists of a cellulosic base material and a noncellulosic face material.

3. Process according to Claim 1, **characterized in that** the textile material is composed of a cellulosic base material and of a face material consisting wholly or partly of cellulose and the molar mass of the cellulose in the face material is at least 10 times above that of the base material.

4. Process according to Claim 1-3, **characterized in that** the cellulosic base material consists of a spun yarn and/or filament yarn.

5. Process according to at least one of Claims 1 to 4, **characterized in that** the cellulosic component partly contains starch and/or starch derivatives.

6. Process according to at least one of Claims 1 to 5, **characterized in that**, after the polysaccharide component has been completely dissolved, the textile face layer is freed of adherent amine oxide by washing, optionally aftertreated, dried and wound up.

7. Process according to Claim 1 to 6, **characterized in that** the aqueous amine oxide simultaneously contains a combination of alkali metal hydroxide, hydroxylamine and water-soluble antioxidants.

8. Process according to Claim 7, **characterized in that** the antioxidant is a water-soluble gallic ester, tannin, hydroquinone or pyrocatechol.

9. Process according to Claim 7, **characterized in that** the hydroxylamine is used as a salt of an acid.

10. Process according to Claim 1 to 9, **characterized in that** the textile material is impregnated with an aqueous amine oxide solution before the dissolving step and optionally a portion of the water is removed by predrying.

11. Process according to Claim 1 to 10, **characterized in that** the dissolved cellulose and, if appropriate, starch or starch derivatives are separated from the amine oxide by precipitating and washing and the amine oxide is concentrated by evaporating water and reused for dissolving.

12. Process according to at least one of Claims 1 to 11, **characterized in that** a portion of the aqueous amine oxide is subjected to a purification via ion exchanger before the evaporating.

## Revendications

1. Procédé de séparation d'un produit textile constitué de deux ou plus de deux composants, **caractérisé en ce qu'**au moins un composant est constitué de polysaccharides, de préférence de la cellulose, et celui-ci est séparé de l'autre/des autres composant(s) grâce à une dissolution dans des oxydes aminés aqueux, de préférence du N-oxyde de N-méthylmorpholine.

2. Procédé selon la revendication 1, **caractérisé en ce que** le produit textile est constitué d'un matériau de support cellulosique et d'un matériau utile non cellulosique.

3. Procédé selon la revendication 1, **caractérisé en ce que** le produit textile se compose d'un matériau de support cellulosique et d'un matériau utile constitué entièrement ou partiellement de cellulose, et la masse molaire de la cellulose dans le matériau utile est supérieure d'au moins un facteur 10 à celle du matériau de support.

4. Procédé selon l'une quelconque des revendications 1 à 3, **caractérisé en ce que** le matériau de support cellulosique est constitué d'un filé de fibres et/ou d'un fil continu.

5. Procédé selon l'une quelconque des revendications 1 à 4, **caractérisé en ce que** le composant cellulosique contient partiellement de l'amidon et/ou des dérivés d'amidon.

6. Procédé selon l'une quelconque des revendications 1 à 5, **caractérisé en ce que**, après dissolution complète du composant de polysaccharide, la couche utile textile est débarrassée par lavage de l'oxyde aminé adhérant éventuellement soumise à un traitement secondaire, séchée et enroulée.

7. Procédé selon l'une quelconque des revendications 1 à 6, **caractérisé en ce que** l'oxyde aminé aqueux contient simultanément une combinaison d'hydroxyde de métal alcalin, d'hydroxylamine et d'antioxydants solubles dans l'eau.

8. Procédé selon la revendication 7, **caractérisé en ce que** l'antioxydant est un ester d'acide gallique soluble dans l'eau, du tanin, de l'hydroquinone ou de la pyrocatéchine.

9. Procédé selon la revendication 7, **caractérisé en ce que** l'hydroxylamine est utilisée en tant que sel d'un acide.

10. Procédé selon l'une quelconque des revendications 1 à 9, **caractérisé en ce que** le produit textile est imprégné avant la dissolution avec une solution aqueuse d'acide aminé et une partie de l'eau est éventuellement éliminée par préséchage.

11. Procédé selon l'une quelconque des revendications 1 à 10, **caractérisé en ce que** la cellulose dissoute et éventuellement l'amidon ou bien les dérivés d'amidon sont séparés de l'oxyde aminé par précipitation et lavage, l'oxyde aminé est reconcentré par évaporation de l'eau et est utilisé à nouveau pour la dissolution.

12. Procédé selon l'une quelconque des revendications 1 à 11, **caractérisé en ce qu'**une partie de l'oxyde aminé aqueux est soumis une purification par l'intermédiaire d'un échangeur d'ions avant la concentration par évaporation.
